# EUROPÄISCHE PATENTANMELDUNG

(11) **EP 3 315 798 A1**
(43) Veröffentlichungstag der Anmeldung: **02.05.2018**
(21) Anmeldenummer: 17195958.8
(22) Anmeldetag: 11.10.2017
(51) Int. Cl.: F16B 25/00, F16B 25/10

(54) **SCHRAUBE**

(30) Priorität: 28.10.2016 DE 102016120623; 30.11.2016 DE 102016123109
(71) Anmelder: fischerwerke GmbH & Co. KG, 72178 Waldachtal (DE)
(72) Erfinder: Krumbeck, Markus, 72202 Nagold (DE); Schneider, Mattias, 72213 Altensteig (DE)
(74) Vertreter: Suchy, Ulrich Johannes

(57) **Zusammenfassung**

Die Erfindung betrifft eine selbstschneidende Schraube (1) mit einem Schraubenschaft (2), einer Schraubenspitze (3) und einem Spitzgewinde als Schraubengewinde (5). Die Erfindung schlägt vor, Schneiden (7) an der Schraubenspitze (3) auszubilden, die bis zu einer Mantelfläche des Schraubenschafts (2) nach außen reichen und beim Einschrauben der Schraube (1) in einen Ankergrund ein Kernloch mit einem Durchmesser des Schraubenschafts (2) schneiden.

## Beschreibung

Die Erfindung betrifft eine Schraube mit den Merkmalen des Oberbegriffs des Anspruchs 1. Insbesondere betrifft die Erfindung eine selbstschneidende Schraube, deren Gewinde sich ein Gegengewinde in Werkstoffen wie beispielsweise Holz oder Kunststoff selbst schneidet.

Die Patentanmeldung EP 0 939 235 A1 offenbart eine selbstschneidende Schraube mit einem Schraubenschaft, einem Schraubenkopf an einem hinteren Ende des Schraubenschafts, einer kegelförmigen Schraubenspitze an einem vorderen Ende des Schraubenschafts und einem Schraubengewinde, das an einem vorderen Ende der Schraubenspitze beginnt und bis etwa in eine Längsmitte des Schraubenschafts reicht. Außerdem weist die bekannte Schraube im Querschnitt sägezahnförmige Rippen auf, die unter einem Winkel von 5° oder mehr zu einer Längsachse der Schraube verlaufen und sich über die Schraubenspitze und einen kurzen Teil des Schraubenschafts erstrecken. Die Sägezahnform der Rippen ist einer Einschraubrichtung der Schraube entgegen gerichtet und die Rippen winden sich entgegengesetzt zum Schraubengewinde. Eine radial zur Schraube gesehen äußere Kante der Rippe bildet eine Schneide, die bei einem Einschrauben der Schraube in einen Ankergrund ein Kernloch für den Schraubenschaft schneidet. Die Schneiden stehen radial zur Schraube gesehen über den Schraubenschaft über, so dass ein von den Schneiden geschnittenes Kernloch einen größeren Durchmesser als der Schraubenschaft aufweist.

Die Patentanmeldung EP 0 761 992 A1 offenbart eine selbstschneidende Schraube mit einer in einer Längsrichtung der Schraube verlaufenden Riffelung nach Art einer Verzahnung an einer Schraubenspitze. Die Riffelung erstreckt sich von einem vorderen Ende nur über einen Teil einer Länge der Schraubenspitze, weswegen sie kein Kernloch schneidet, dessen Durchmesser so groß wie ein Durchmesser eines Schraubenschafts ist.

Aufgabe der Erfindung ist, eine insbesondere selbstschneidende Schraube vorzuschlagen, die sich gleichermaßen zum Einschrauben in Holz und Kunststoff eignet. Diese Aufgabe wird erfindungsgemäß durch die Merkmale des Anspruchs 1 gelöst. Die erfindungsgemäße Schraube weist einen Schraubenschaft, eine Schraubenspitze und ein Schraubengewinde auf, das ein- oder mehrgängig sein kann und das sich von der Schraubenspitze zumindest über einen Teil einer Länge des Schraubenschafts erstreckt. Das Gewinde kann an einem vorderen Ende oder mit Abstand vom vorderen Ende der Schraubenspitze beginnen, jedenfalls aber nicht erst im Bereich des Schraubenschafts. Mit dem "Schraubenschaft" ist hier ein Teil der Schraube gemeint, der nicht das Schraubengewinde, nicht die Schraubenspitze und nicht einen Schraubenkopf umfasst. Im Bereich des Schraubengewindes weist der Schraubenschaft insbesondere eine zylindrische Hüllfläche auf. Mit der "Schraubenspitze" ist der in Einbringrichtung vordere Teil der Schraube gemeint, der nicht das Schraubengewinde umfasst und der sich in Längsrichtung der Schraube so weit erstreckt, bis der Schraubenschaft mit der zylindrischen Hüllfläche beginnt. Insbesondere ist die Schraubenspitze im Wesentlichen kegelig. "Vorne" und "hinten" bezieht sich immer auf die Einbringrichtung der Schraube.

Des Weiteren weist die erfindungsgemäße Schraube mindestens eine Schneide auf, die in einem Winkel zum Schraubengewinde verläuft. Mit "in einem Winkel" ist gemeint, dass die Schneide nicht parallel zum Schraubengewinde verläuft, das heißt nicht als Wendel mit derselben Steigung wie das Schraubengewinde. Sondern durch den Winkel zum Schraubengewinde führt die Schneide eine Schnittbewegung bei einem Einschrauben der Schraube in einen Ankergrund aus. Die Schneide kann beispielsweise achsparallel, umlaufend oder wendelförmig, jedoch mit anderer Steigung als das Schraubengewinde und insbesondere mit entgegengesetzter Steigung verlaufen. Zweck der mindestens einen Schneide ist es, beim Einschrauben der Schraube in einen Ankergrund ein Kernloch für den Schraubenschaft frei zu schneiden. Ist der Ankergrund vorgebohrt oder formt die Schraubenspitze ein Loch in den Ankergrund, weitet die mindestens eine Schneide das Loch auf, sofern es nicht größer ist als die mindestens eine Schneide es schneiden würde.

Erfindungsgemäß erstreckt sich die mindestens eine Schneide ausgehend von einem in der Einschraubrichtung der Schraube hinteren Ende der Schraubenspitze über mindestens 2/3 einer Länge der Schraubenspitze nach vorn. Insbesondere erstreckt sich die Schneide über mindestens 1/5 und vorzugsweise über mindestens 1/3 einer Länge der Schraubenlänge. Das hintere Ende der Schraubenspitze bildet einen Übergang vom Schraubenschaft zur Schraubenspitze. Die Schneide erstreckt sich also in Längsrichtung der Schraube über die Spitze hinaus bis in den Bereich des Schraubenschafts. Die mindestens eine Schneide verringert ein zum Einschrauben der Schraube notwendiges Drehmoment insbesondere bei einem langen Schraubenschaft, weil sie durch das Freischneiden eines Kernlochs eine Reibung zwischen dem Schraubenschaft und dem Ankergrund verringert. Die Schneide ist einfacher herstellbar, wenn sie nicht bis zum vorderen Ende der Schraubenspitze reicht, und weist trotzdem eine gute Schneidleistung auf.

Vorzugsweise verläuft die mindestens eine Schneide quer zum Schraubengewinde, womit ein Winkel von zwischen etwa 90° bis 60° zum Schraubengewinde gemeint ist. Die Schneide verläuft quer oder schräg in einem spitzen Winkel zu ihrer Bewegung beim Einschrauben der Schraube, wobei die Bewegung wendelförmig entsprechend dem Schraubengewinde ist. Dadurch ist mit einer guten Schneidleistung zu rechnen.

Die mindestens eine Schneide kann gerade oder bogenförmig verlaufen. Eine gerade Schneide kann beispielsweise auch achsparallel zur Längsachse der Schraube verlaufen.

Eine Ausgestaltung der Erfindung sieht vor, dass sich an ein (in der Einschraubrichtung) vorderes Ende der mindestens einen Schneide eine Stirnfläche anschließt, die sich in einer Umfangsrichtung entgegen einer Drehrichtung beim Einschrauben der Schraube in einen Ankergrund erstreckt. Die Stirnfläche steht von der Schraubenspitze stufenartig nach außen. Die Stirnfläche bildet eine Art Stanzfläche oder eine Nebenschneide, die das Freischneiden des Kernlochs unterstützt.

In radialer Richtung, also senkrecht zur Schraubenlängsachse, reicht die mindestens eine Schneide vorzugsweise bis zu einer Mantelfläche des Schraubenschafts. Sie schneidet dadurch ein Kernloch mit einem Durchmesser, der einem Durchmesser des Schraubenschafts entspricht. Das erleichtert das Einschrauben der Schraube, indem eine Reibung zwischen dem Schraubenschaft und einem Ankergrund vermindert wird, und erhält den Ankergrund radial zur Schraube gesehen nach innen bis zu einem Fuß des Schraubengewindes am Schraubenschaft als Widerlager für das Schraubengewinde. Außerdem schneidet die mindestens eine Schneide keinen Zwischenraum zwischen dem Ankergrund und dem Schraubenschaft, was beispielsweise für ein Aufspreizen eines Spreizdübels aus Kunststoff wichtig ist. In einer bevorzugten Variante erreicht die Schneide den maximalen Abstand zur Längsachse der Schraube erst hinten am Übergang zum Schraubenschaft. Die Schneide reicht also vorne weniger weit in radialer Richtung. In einer alternativen Variante weist die Schneide von vorne bis hinten einen gleich bleibenden radialen Abstand zur Längsachse auf, verläuft also parallel zu ihr.

An dem (in der Einschraubrichtung) hinteren Ende der Schraubenspitze weist eine Ausgestaltung der Erfindung eine umlaufende Ringstufe am bzw. als Übergang von der Schraubenspitze zum Schraubenschaft ohne die Schraubenspitze auf. Die Ringstufe ermöglicht es, die mindestens eine Schneide mit einer Spanfläche bis zu ihrem hinteren Ende auszubilden, das sich an einem vorderen Ende des Schraubenschafts befindet.

Zur Ausbildung der mindestens einen Schneide sieht eine Ausgestaltung der Erfindung mindestens eine dreiecksförmige Erhebung an (einer Mantelfläche) der Schraubenspitze vor, deren in einer Drehrichtung beim Einschrauben der Schraube vordere Kante die mindestens eine Schneide bildet. Das Dreieck kann gleichseitig oder nicht-gleichseitig sein und es kann - abweichend von einem geometrischen Dreieck - eine oder mehrere bogenförmige, konvexe und/oder konkave Seiten zur Bildung einer bogenförmigen Schneide aufweisen.

Die Erfindung wird nachfolgend anhand in der Zeichnung dargestellter Ausführungsbeispiele näher erläutert. Es zeigen:
- Figur 1: eine Schraube gemäß der Erfindung in Seitenansicht;
- Figuren 1a-c: eine Schraubenspitze der Schraube aus Figur 1 aus drei jeweils um 120° versetzten Blickrichtungen; und
- Figuren 2a-c: eine Schraubenspitze einer abgewandelten, erfindungsgemäßen Ausführungsform der Schraube aus Figur 1 mit Figuren 1a-c entsprechenden Blickrichtungen.

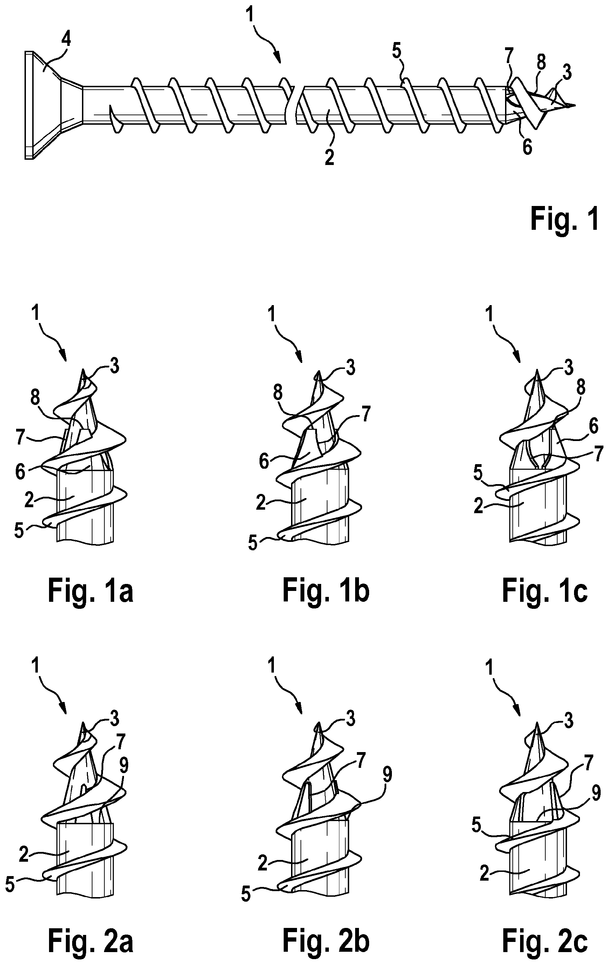

Die in Figur 1 dargestellte, erfindungsgemäße Schraube 1 ist eine selbstschneidende Schraube 1 aus beispielsweise Stahl. Sie weist einen zylindrischen Schraubenschaft 2 und hieran anschließend eine kegelförmige Schraubenspitze 3 an einem in einer Einschraubrichtung vorderen Ende und einem Schraubenkopf 4 an einem in der Einschraubrichtung hinteren Ende auf. Im Ausführungsbeispiel ist der Schraubenkopf 4 ein Senkkopf mit einem in der Zeichnung nicht sichtbaren Innenstern (Torx) zu einem Drehantrieb der Schraube 1, was allerdings nicht zwingend für die Erfindung ist. Als Schraubengewinde 5 weist die Schraube 1 ein selbstschneidendes Spitzgewinde auf, das bei einem Einschrauben der Schraube 1 in einen Ankergrund aus beispielsweise Holz oder Kunststoff ein Gegengewinde in den Ankergrund schneidet. Das Schraubengewinde 5 wird hier nicht als Teil des Schraubenschafts 2 oder der Schraubenspitze 3 betrachtet. Das Schraubengewinde 5 erstreckt sich von oder nahezu von einem in der Einschraubrichtung vorderen Ende der Schraube 1 über die Schraubenspitze 3 und einen großen Teil einer Länge des Schraubenschafts 2 bis nahe an den Schraubenkopf 4.

An der Schraubenspitze 3 weist die Schraube 1 Erhebungen 6 auf, die in Ansicht radial zur Schraube 1 gesehen die Form spitzwinkliger, gleichseitiger Dreiecke aufweisen. Im Ausführungsbeispiel weist die Schraube 1 drei Erhebungen 6 an der Schraubenspitze 3 auf, die gleichmäßig über einen Umfang verteilt angeordnet, das heißt jeweils um 120° in Umfangsrichtung zueinander versetzt sind. Die Figuren 1a-c zeigen die Erhebungen 6 an der Schraubenspitze 3 aus drei verschiedenen, jeweils um 120° zueinander versetzten Blickrichtungen. Eine Spitze der dreiecksförmigen Erhebungen 6 ist einem vorderen Ende der Schraubenspitze 3 zugewandt und die Erhebungen 6 enden an einem hinteren Ende der Schraubenspitze 3, das heißt dort, wo die kegelförmige Schraubenspitze 3 in den zylindrischen Schraubenschaft 2 übergeht. Das vordere Ende der Erhebungen 6 befindet sich ungefähr in einer Mitte einer Länge der Schraubenspitze 3. Eine in einer Drehrichtung der Schraube 1 beim Einschrauben der Schraube 1 vordere Kante der Erhebungen 6 bildet eine Schneide 7. Die Schneiden 7 beginnen radial zur Schraube 1 gesehen auf einem mittleren Radius des Schraubenschafts 2 und erstrecken sich radial gesehen bis zu einem Radius des Schraubenschafts 2, das heißt bis zu einer Mantelfläche des Schraubenschafts 2. Die Schneiden 7 stehen radial nicht über den Schraubenschaft 2 über. Die Anzahl, Anordnung und Form der Erhebungen 6 ist nicht zwingend für die Erfindung.

Bei einem Einschrauben der Schraube 1 in einen Ankergrund aus beispielsweise Holz oder Kunststoff ohne Vorbohren formt zunächst die Schraubenspitze 3 ein Loch in den Ankergrund, das die Schneiden 7 auf den Durchmesser des Schraubenschafts 2 erweitern. Anders ausgedrückt schneiden die Schneiden 7 ein Kernloch mit dem Durchmesser des Schraubenschafts 2 frei. Ist der Ankergrund vorgebohrt, oder weist auf andere Weise ein Loch auf, dessen Durchmesser kleiner als der Durchmesser des Schraubenschafts 2 der Schraube 1 ist, weiten die Schneiden 7 das Loch ebenfalls auf den Durchmesser des Schraubenschafts 2 auf, das heißt sie schneiden ein Kernloch mit dem Durchmesser des Schraubenschafts 2 frei. Das Kernloch, das die Schneiden 7 frei schneiden, vermindert beim Einschrauben der Schraube 1 in einen Ankergrund eine Reibung zwischen dem Schraubenschaft 2 und dem Ankergrund und verringert dadurch ein Antriebsmoment, das zum Einschrauben der Schraube 1 in den Ankergrund notwendig ist. Die Schneiden 7 schneiden kein Loch mit einem größeren Durchmesser als dem Durchmesser des Schraubenschafts 2, so dass kein den Schraubenschaft 2 im Ankergrund umschließender Zwischenraum entsteht. Das ist ein Vorteil beim Aufspreizen eines Spreizdübels aus Kunststoff durch Einschrauben der erfindungsgemäßen Schraube 1, weil ihr Schraubenschaft 2 den Spreizdübel (nicht dargestellt) aufgespreizt hält.

In Figuren 1a-c verläuft die Schneide 7 bogenförmig konkav und quer, das heißt in einem Winkel zwischen etwa 60° und 90° zum Schraubengewinde 5. Dadurch ist die Schneide 7 quer oder in einem spitzen Winkel schräg zu ihrer Bewegung beim Einschrauben der Schraube 1 in einen Ankergrund ausgerichtet.

In Figuren 1a-c ist eine vordere Ecke der dreiecksförmigen Erhebungen 6 "abgeschnitten", so dass sich an einem in der Einschraubrichtung der Schraube 1 vorderen Ende der Schneiden 7 Stirnflächen 8 an die Schneiden 7 anschließen, die stufenartig von der Schraubenspitze 3 nach außen abstehen und in einer Umfangsrichtung der Schraube 1 verlaufen. Und zwar verlaufen die Stirnflächen 8 von den Schneiden 7 aus entgegen einer Drehrichtung der Schraube 1 beim Einschrauben in einen Ankergrund. Die Stirnflächen 8 bilden Stanzflächen oder Nebenschneiden, die das Freischneiden des Kernlochs unterstützen.

In der in Figuren 2a-c gezeigten erfindungsgemäßen Abwandlung weisen die dreiecksförmigen Erhebungen 6 an der Schraubenspitze 3 die Form gleichseitiger, spitzwinkliger Dreiecke auf, deren vordere Spitze nicht "abgeschnitten" sondern vorhanden ist. Dadurch entfallen die Stirnflächen 8. Die dreiecksförmigen Erhebungen 6 weisen in Figuren 2a-c gerade Seiten auf, so dass die Schneiden 7 gerade sind. Am hinteren Ende der Schraubenspitze 3, also am Übergang von der kegelförmigen Schraubenspitze 3 zum zylindrischen Schraubenschaft 2, weist die Schraube 1 in Figuren 2a-c eine umlaufende Ringstufe 9 auf, die sich zwischen den dreiecksförmigen Erhebungen 6 erstreckt und so hoch wie die dreiecksförmigen Erhebungen 6 ist. Die Ringstufe 9 bildet eine Art Stanzfläche, die die Ausbildung des Kernlochs mit dem Durchmesser des Schraubenschafts 2 unterstützt.

### Bezuqszeichenliste

- 1: Schraube
- 2: Schraubenschaft
- 3: Schraubenspitze
- 4: Schraubenkopf
- 5: Schraubengewinde
- 6: Erhebung
- 7: Schneide
- 8: Stirnfläche
- 9: Ringstufe

## Patentansprüche

1. Schraube, mit einem Schraubenschaft (2), einer Schraubenspitze (3) und einem Schraubengewinde (5), das sich von der Schraubenspitze (3) zumindest über einen Teil des Schraubenschafts (2) erstreckt, und mit mindestens einer in einem Winkel zum Schraubengewinde (5) verlaufenden Schneide (7) im Bereich der Schraubenspitze (3), die bei einem Einschrauben der Schraube (1) in einen Ankergrund ein Kernloch frei schneidet, **dadurch gekennzeichnet, dass** sich die mindestens eine Schneide (7) ausgehend von einem Übergang vom Schraubenschaft (2) zur Schraubenspitze (3) über maximal 2/3, und insbesondere mindestens 1/3, einer Länge der Schraubenspitze (3) erstreckt.

2. Schraube nach Anspruch 1, **dadurch gekennzeichnet, dass** die mindestens eine Schneide (7) quer zum Schraubengewinde (5) verläuft.

3. Schraube nach Anspruch 1 oder 2, **dadurch gekennzeichnet, dass** die mindestens eine Schneide (7) gerade oder bogenförmig verläuft.

4. Schraube nach einem der Ansprüche 1 bis 3, **dadurch gekennzeichnet, dass** sich an ein vorderes Ende der mindestens einen Schneide (7) eine sich in einer Umfangsrichtung entgegen einer Drehrichtung der Schraube (1) bei einem Einschrauben in einen Ankergrund erstreckende Stirnfläche (8) anschließt, die von einer Mantelfläche der Schraubenspitze (3) stufenartig nach außen steht.

5. Schraube nach einem der vorhergehenden Ansprüche, **dadurch gekennzeichnet, dass** die mindestens eine Schneide (7) in radialer Richtung bis zu einer Mantelfläche des Schraubenschafts (2) reicht.

6. Schraube nach einem der vorhergehenden Ansprüche, **dadurch gekennzeichnet, dass** die Schraube (1) eine umlaufende Ringstufe (9) am Übergang vom Schraubenschaft (2) zur Schraubenspitze (3) aufweist.

7. Schraube nach einem der vorhergehenden Ansprüche, **dadurch gekennzeichnet, dass** die Schraubenspitze (3) mindestens eine in Ansicht dreiecksförmige Erhebung (6) aufweist, deren in einer Drehrichtung der Schraube (1) bei einem Einschrauben in einen Ankergrund vordere Kante die mindestens eine Schneide (7) bildet.
